# EUROPEAN PATENT APPLICATION

(11) **EP 3 392 778 A1**
(43) Date of publication of application: **24.10.2018**
(21) Application number: 16875423.2
(22) Date of filing: 02.12.2016
(51) Int. Cl.: G06F 13/38, H04L 29/06

(54) **COMMUNICATION DEVICE, COMMUNICATION METHOD, PROGRAM, AND COMMUNICATION SYSTEM**

(30) Priority: 16.12.2015 JP 2015244900
(71) Applicant: Sony Corporation, Tokyo 108-0075 (JP)
(72) Inventor: LEE Sonfun, Tokyo 108-0075 (JP); TAKAHASHI Hiroo, Tokyo 108-0075 (JP); KOSHISAKA Naohiro, Atsugi-shi Kanagawa 243-0021 (JP)
(74) Representative: MFG Patentanwälte Meyer-Wildhagen Meggle-Freund Gerhard PartG mbB
(86) International application number: PCT/JP2016/085858
(87) International publication number: WO 2017/104440

(57) **Abstract**

The present disclosure relates to a communication apparatus, a communication method, a program, and a communication system that are configured to provide more correct communication.

A master has a sending block for sending data to a slave on a word basis in which data of two bytes are included per one word and a confirmation block for confirming the data to be sent to the slave so as to include the notification information necessary for recognizing presence or absence of a word having invalid data into a signal to be sent to the slave. The slave has a receiving block for receiving the data sent from the master on a word basis and a recognition block for, if the received word is recognized to have invalid data according to the notification information included in the signal transferred from the master, avoiding the execution of the processing based on that invalid data. For example, on the basis of a result of the confirmation of the notification information, the invalid data included in the word recognized to have invalid data is masked. The present technology is applicable to a bus IF through which communication is executed in compliance with the I3C standard, for example.

## Description

### [Technical Field]

The present disclosure relates to a communication apparatus, a communication method, a program, and a communication system and, more particularly, to a communication apparatus, a communication method, a program, and a communication system that are configured to realize more correct communication.

### [Background Art]

For the bus IF (Interface) for use in the communication between devices on a board with two or more devices mounted, I2Cs (Inter-Integrated Circuits), for example, have often been in use. Recently, the realization of speed-enhanced I2Cs has been pursued, thereby promoting the specifications of I3C (Improved Inter Integrated Circuit) for a next-generation standard.

For example, PTL 1 below discloses a digital data processing system for interconnecting a host processor and a sub system controller through the I2C. Further, PTL 2 discloses a method of realizing a communication protocol arranged on top of the standard I2C protocol in a layered manner.

### [Citation List]

### [Patent Literature]

[PTL 1] JP 2000-99448A
[PTL 2] JP 2002-175269A

### [Summary]

### [Technical Problems]

With I3C, the standard is specified such that transmission can be switched between the SDR (Single Data Rate: normal transfer) mode for transferring data of one byte per one word and the HDR (High Data Rate: high-speed transfer) mode for transferring data of two bytes per one word.

As described above, in the HDR mode, data is transferred in a word unit of two bytes per word, so that the byte count of the valid data per one word may depend on the byte count of the valid of the entire data to be transferred. For example, if the byte count of the valid data of the entire data is an even number, then the valid data per one word is two bytes in each word. On the other hand, if the byte count of the valid data of the entire data is odd numbered, then a word in which the valid data per one word is one byte occurs. Thus, if the byte counts of the valid data per one work are different, then it is assumed that the invalid data included in a word with the valid data being one byte be erroneously recognized as the valid data, thereby making it difficult to execute correct communication.

Therefore, the present disclosure addresses the above-identified problems and solves these problems so as to execute more correct communication.

### [Solutions to Problems]

In carrying out the present disclosure and according to a first aspect thereof, there is provided a communication apparatus. This communication apparatus includes a sending section configured to send data including a predetermined byte count per one word to another communication apparatus on a word basis in which the data is included and a confirmation section configured to confirm the data to be sent to the another communication apparatus so as to include notification information necessary for recognizing presence or absence of a word having invalid data into a signal to be transferred to the another communication apparatus.

In carrying out the present disclosure and according to the first aspect thereof, there is provided a communication method or a program. The communication method or the program includes the steps of sending data including a predetermined byte count per one word to another communication apparatus on a word basis in which the data is included and confirming the data to be sent to the another communication apparatus so as to include notification information necessary for recognizing presence or absence of a word having invalid data into a signal to be transferred to the another communication apparatus.

In the first aspect of the present disclosure, data including a predetermined byte count per one word is sent to another communication apparatus on a word basis in which the data is included and the data to be sent to the another communication apparatus is confirmed so as to include notification information necessary for recognizing presence or absence of a word having invalid data into a signal to be transferred to the another communication apparatus.

In carrying out the present disclosure and according to a second aspect thereof, there is provided a communication apparatus. This communication apparatus includes a receiving section configured to receive data sent on a word basis including data of a predetermined byte count per one word from another communication apparatus and a recognition section configured to, if, in accordance with notification information necessary for recognizing presence or absence of a word having invalid data, the notification information being included in a signal transferred from the another communication apparatus, the receiving section recognizes that the received word has invalid data, avoid an execution of processing based on the invalid data.

In carrying out the present disclosure and according to the second aspect thereof, there is provided a communication method or a program. The communication method or the program has the steps of receiving data sent on a word basis including data of a predetermined byte count per one word from another communication apparatus and avoiding, if, in accordance with notification information necessary for recognizing presence or absence of a word having invalid data, the notification information being included in a signal transferred from the another communication apparatus recognizes that the received word has invalid data, the execution of processing based on the invalid data.

In the second aspect of the present disclosure, data sent on a word basis including data of a predetermined byte count per one word is received from another communication apparatus and, if, in accordance with notification information necessary for recognizing presence or absence of a word having invalid data, the notification information being included in a signal transferred from the another communication apparatus, the invalid data is received, the execution of processing based on the invalid data is avoided.

In carrying out the present disclosure and according to a third aspect thereof, there is provided a communication system. This communication system includes a communication apparatus on a sending side having a sending section configured to send data including a predetermined byte count per one word to a communication apparatus on a receiving side on a word basis in which the data is included, and a confirmation section configured to confirm the data to be sent to the communication apparatus on the receiving side so as to include notification information necessary for recognizing presence or absence of a word having invalid data into a signal to be transferred to the communication apparatus on the receiving side; and a communication apparatus on the receiving side having a receiving section configured to receive the data sent from a communication apparatus on a sending side, and a recognition section configured to, if, in accordance with the notification information being included in a signal transferred from the communication apparatus on the sending side, the receiving section recognizes that the received word has invalid data, avoid an execution of processing based on the invalid data.

In the third aspect of the present disclosure, in the communication apparatus on the receiving side, data is sent on a word basis including data of a predetermined word count per one word and data to be sent to the communication apparatus on the receiving side is confirmed so as to include the notification information necessary for the recognition of presence or absence of a word having invalid data into a signal to be transferred to the communication apparatus on the receiving side. Also, in the communication apparatus on the receiving side, if, in accordance with the notification information necessary for the recognition of presence or absence of a word having invalid data, this notification information being included in a signal transferred from the communication apparatus on the sending side, the received word is recognized to have invalid data, then the processing based on this invalid data is avoided.

### [Advantageous Effects of Invention]

According to the first aspect through the third aspect of the present disclosure, more correct communication can be executed.

### [Brief Description of Drawings]

[FIG. 1] FIG. 1 is a block diagram illustrating a configurational example of one embodiment of a bus IF to which the present technology is applied.
[FIG. 2] FIG. 2 is a diagram illustrating a one-word data format at the time of write transfer in the DDR mode.
[FIG. 3] FIG. 3 is a diagram illustrating a one-word command format at the time of write transfer in the DDR mode.
[FIG. 4] FIG. 4 is a diagram illustrating a one-word CRC format at the time of write transfer in the DDR mode.
[FIG. 5] FIG. 5 is a diagram for explaining the transmission of a signal in the TSP mode and the TSL mode.
[FIG. 6] FIG. 6 is a diagram illustrating one example of waveforms in the TSP mode and the TSL mode.
[FIG. 7] FIG. 7 is a diagram for explaining the use of a special symbol pairs (2, 2).
[FIG. 8] FIG. 8 is a flowchart for explaining one example of the processing for sending write data.
[FIG. 9] FIG. 9 is a flowchart for explaining one example of the processing for receiving write data.
[FIG. 10] FIG. 10 is a block diagram illustrating a configurational example of one embodiment of a computer to which the present technology is applied.

### [Description of Embodiments]

The following describes in detail specific embodiments to which the present technology is applied with reference to drawings.

### <Configurational example of bus IF>

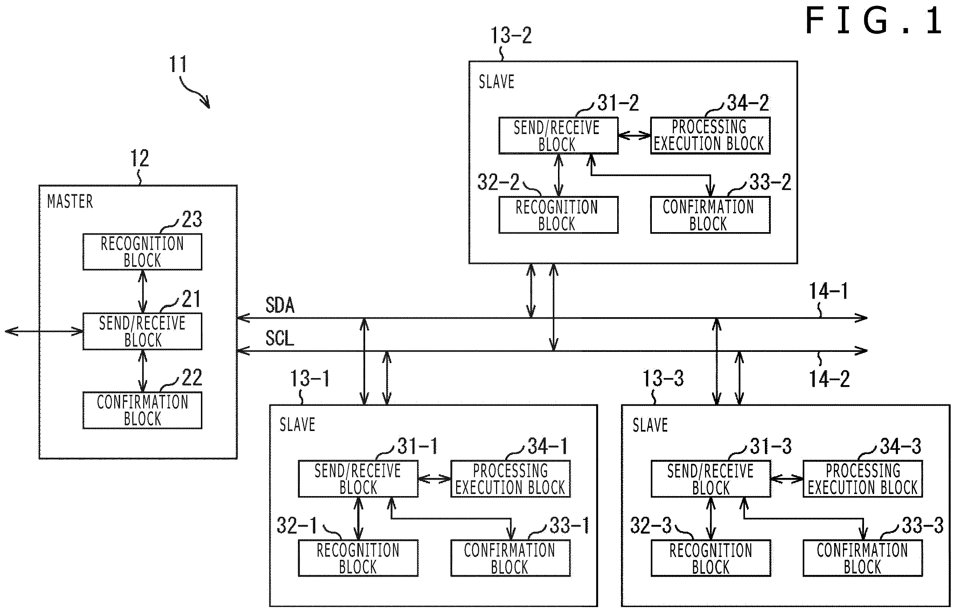

Now, FIG. 1 depicts a block diagram illustrating a configurational example of one embodiment of a bus IF to which the present technology is applied.

A bus IF 11 illustrated in FIG. 1 is configured such that a master 12 is connected to three slaves 13-1 through 13-3 with data signal lines 14-1 and a clock signal line 14-2. For example, in the bus IF 11, the communication compliant with the I3C standard described above is executed so as to transmit signals via the data signal line 14-1 and the clock signal line 14-2. For example, serial data (SDA: Serial Data) is serially transmitted, bit by bit via the data signal line 14-1 and a serial clock (SCL: Serial Clock) having a predetermined frequency is transmitted via the clock signal line 14-2.

The master 12 has the privilege of communication in the bus IF 11, executing communication with the slaves 13-1 through 13-3 via the data signal line 14-1 and the clock signal line 14-2. As depicted, the master 12 is configured by a send/receive block 21, a confirmation block 22, and a recognition block 23, the send/receive block 21, the confirmation block 22, and the recognition block 23 being mounted on the physical layer of a protocol that executes communication with the slaves 13-1 through 13-3, for example.

The send/receive block 21 transfers signals by changing the potentials of the data signal line 14-1 and the clock signal line 14-2 between H level and the L level, thereby sending and receiving data and commands between the slaves 13-1 through 13-3. For example, when write data to be written to the slaves 13-1 through 13-3 is supplied from upper equipment not depicted, the send/receive block 21 sends the supplied write data to the slaves 13-1 through 13-3 on the basis of the word unit in which two-byte data is included per one word. In addition, when the read data read from the slaves 13-1 through 13-3 comes, the send/receive block 21 receives this read data and supplies the received read data to the upper equipment.

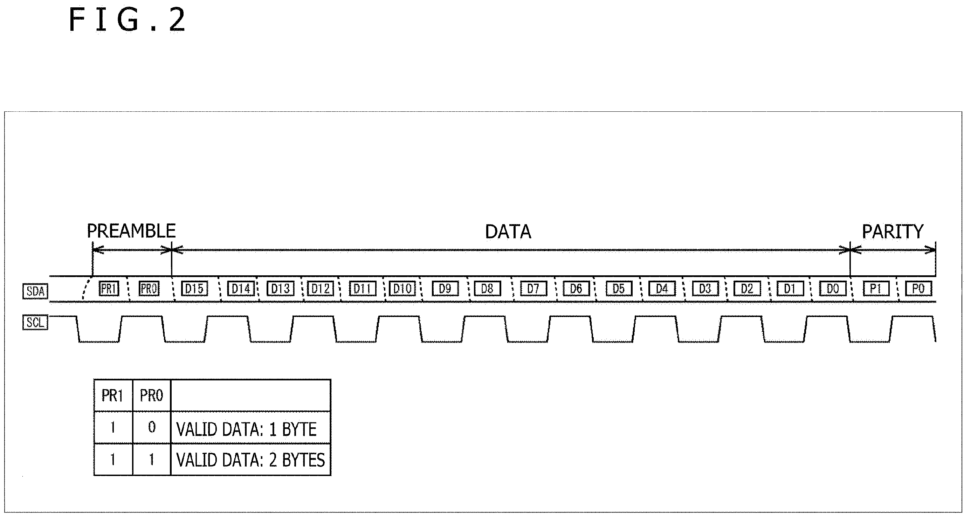

The confirmation block 22 confirms the write data to be supplied from upper equipment not depicted to the send/receive block 21 and instructs the send/receive block 21 to include the notification information necessary for recognizing the presence or absence of a word having invalid data into a signal to be transferred to the slaves 13-1 through 13-3. It should be noted that details of the notification information included in a signal to be transferred to the slaves 13-1 through 13-3 will be described later with reference to FIG. 2 through FIG. 7.

The recognition block 23 confirms the notification information included in a signal for use by the slaves 13-1 through 13-3 in sending read data so as to recognize the presence or absence of a word having invalid data, for example. Then, on the basis of a result of the confirmation of the notification information, the recognition block 23 instructs the send/receive block 21 to mask the invalid data included in the word recognized as having the invalid data. Consequently, the valid data is masked in the send/receive block 21 and only the valid data other than this invalid data is supplied to the upper equipment. That is, if the recognition block 23 recognizes that the word including the read data received by the send/receive block 21 has invalid data, the execution of the processing based on this invalid data can be avoided (the invalid data is ignored).

Under the control of the master 12, the slaves 13-1 through 13-3 execute communication with the master 12 via the data signal lines 14-1 and the clock signal line 14-2. It should be noted that the slaves 13-1 through 13-3 are each configured in the similar manner and therefore the slaves 13-1 through 13-3 are hereafter referred to simply as the slave 13 unless otherwise noted; this holds true with the blocks configuring the slave 13. As depicted, the slave 13 is configured by a send/receive block 31, a recognition block 32, a confirmation block 33, and a processing execution block 34, the send/receive block 31, the recognition block 32, and the confirmation block 33 being mounted on the physical layer of a protocol for executing the communication with the master 12.

As with the send/receive block 21 of the master 12, the send/receive block 31 sends and receives data and commands with the master 12 through a signal that is transferred by changing the levels of the data signal line 14-1 and the clock signal line 14-2. For example, the send/receive block 31 supplies a signal transferred from the master 12 to the recognition block 32 and supplies the data and commands sent by use of this signal to the processing execution block 34.

The recognition block 32 confirms the notification information included in a signal supplied from the send/receive block 31 and recognizes the presence or absence of a word having invalid data. Then, on the basis of a result of the confirmation of the notification information, the recognition block 32 instructs the send/receive block 31 to mask the invalid data included in the word recognized as having the invalid data. Consequently, the valid data is masked in the send/receive block 31 and only the valid data other than this invalid data is supplied to the processing execution block 34. That is, if the recognition block 23 recognizes that the word including the read data received by the send/receive block 31 has invalid data, the execution of the processing based on this invalid data in the processing execution block 34 can be avoided (the invalid data is ignored).

The confirmation block 33 confirms the read data read from the processing execution block 34 and sent from the send/receive block 31 and instructs the send/receive block 31 to include the notification information necessary for recognizing the presence or absence of a word having invalid data in the master 12 into a signal that is transferred to the master 12. For example, if, for a request for read data of 10 bytes by the master 12, the slave 13 can send only nine bytes for some reasons, then the invalid data of one byte is included in the word. Assuming such a situation, the confirmation block 33 makes the master 12 recognize the presence or absence of a word having invalid data by use of the notification information.

The processing execution block 34 executes the processing according to the respective functions of the slave 13. For example, if the slave 13 is a memory or a register, then the processing execution block 34 writes the data supplied from the send/receive block 31 or reads the written data to supply the written data to the send/receive block 31 by following a command. At this moment, because the invalid data is masked in the send/receive block 31, the processing execution block 34 can execute the processing based on only the valid data.

In the data send/receive operation in the bus IF 11 configured as described above, the master 12 always has the privilege of communication in which signals are transferred along the data signal line 14-1 with reference to the clock supplied by the master 12 to the clock signal line 14-2.

Further, in the master 12, the send/receive block 21, the confirmation block 22, and the recognition block 23 are mounted on the physical layer of a protocol, while, in the slave 13, the send/receive block 31, the recognition block 32, and the confirmation block 33 are mounted on the physical layer of a protocol. Consequently, an existing upper protocol can be applied without change without the necessity for adding the processing such as ignoring the invalid byte in the upper layer, for example. That is, the processing (the processing of avoiding the processing based on invalid data) of masking the invalid data by the send/receive block 21 and the send/receive block 31 can be executed only on the physical layer.

As described above, in the bus IF 11, the communication compliant with the standard of I3C is executed and, in the HDR mode of I3C, the three modes, the DDR (Double Data Rate) mode, the TSP (Ternary Symbol Pure-Bus) mode, and the TSL (Ternary Symbol Legacy-inclusive-Bus) mode, are defined by the standard. The following describes a method of the notification of the presence or absence of a word having invalid data in each the DDR mode, the TSP mode, and the TSL mode with reference to FIG. 2 through FIG. 7.

### <Notification method in the DDR mode>

At the time of write transfer in the DDR mode, one word at the time of sending data is configured by a 2-bit preamble, a 16-bit data, and a 2-bit parity, for example. Likewise, one word at the time of sending command is configured by a 2-bit preamble, a 16-bit command, and a 2-bit parity. Further, one word at the time of sending CRC (Cyclic Redundancy Check) is configured by a 2-bit preamble and a 16-bit CRC.

Therefore, for the first notification method of the DDR mode, a method of including notification information in the preamble can be used.

As illustrated in FIG. 2, at the time of write transfer in the DDR mode, data of one word is configured by 2-byte preambles PR0 and PR1, 16-byte data D0 through D15, and 2-byte parities P0 and P1.

For example, it is assumed that, if preamble PR1 is "1" and preamble PR0 is "0," notification information be indicative that the byte count of the valid data of the subsequent write data per one word is one byte. Further, it is assumed that, if preamble PR1 is "1" and preamble PR0 is "1," notification information be indicative that the byte count of the valid data of the subsequent write data per one word is two bytes.

As described above, the master 12 can include the notification information necessary for the recognition of presence or absence of a word having invalid data by using the values of preambles PR0 and PR1 so as to represent whether the byte count of the subsequent valid data per word is 1 byte or 2 bytes. That is, if the notification information is indicative of one byte, then the slave 13 can recognize that this word has invalid data, while, if the notification information is indicative of two bytes, then the slave 13 can recognize that this word does not have invalid data.

Further, the slave 13 can obtain the byte count of the valid data of the entire write data on the basis of the byte count of the valid data of the write data per one word and the count of all the sent words, for example.

Next, for the second notification method in the DDR mode, a method of including notification information in a command can be used.

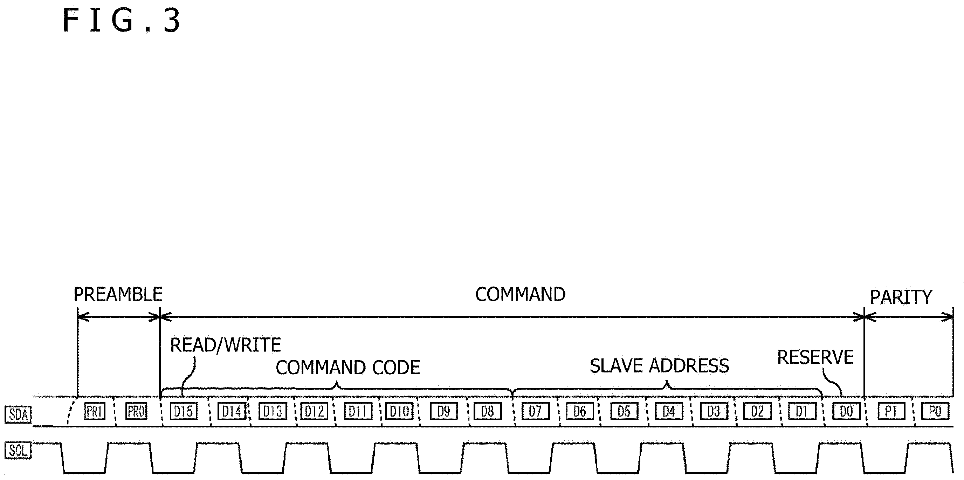

As illustrated in FIG. 3, at the time of write transfer in the DDR mode, a 1-word command is configured by a command code of eight bits D8 through D15, a slave address of seven bits D1 through D7, and a reserve of one bit D0. Further, of the command codes D8 through D15, command code D15 is a flag indicative of read/write.

For example, in the first example, the data length of the valid data of the entire write data can be padded in the command codes D8 through D15 as notification information. Alternatively, in the second example, odd/even-number information (information indicative of even number or odd number) of the valid data of the entire write data can be padded in the command codes D8 through D15 as notification information. Still alternatively, in the third example, odd/even-number information of the valid data of the entire write data can be padded in reserve D0 as notification information. It should be noted that the second example and the third example are suitably employable because the data length is not limited.

As described above, the master 12 can include the data length of the valid data of the entire write data or odd/even-number information of the valid data of the entire write data into a signal as the notification information necessary for the recognition of presence/absence of a word having invalid data.

That is, if the data length of the valid data of the entire write data is odd-numbered and the odd/even-number information is indicative of an odd number, then the slave 13 can recognize that there is a word having invalid data. On the other hand, if the data length of the valid data of the entire write data is odd-numbered and the odd/even-number information is indicative of an even number, then the slave 13 can recognize that there is no word having invalid data.

Then, in the slave 13, if the recognition block 32 recognizes that there is a word having invalid data and the entire write data is odd-numbered, the word to be sent last becomes one byte, causing the send/receive block 31 to mask the invalid data of this last word.

Further, if the master 12 notifies the slave 13 of the odd/even-number information of the valid data of the entire write data by use of a command, then the slave 13 can obtain the byte count of the valid data of the entire write data on the basis of this odd/even-number information and the all sent word counts.

Next, for the third notification method in the DDR mode, a method of including notification information in CRC can be used.

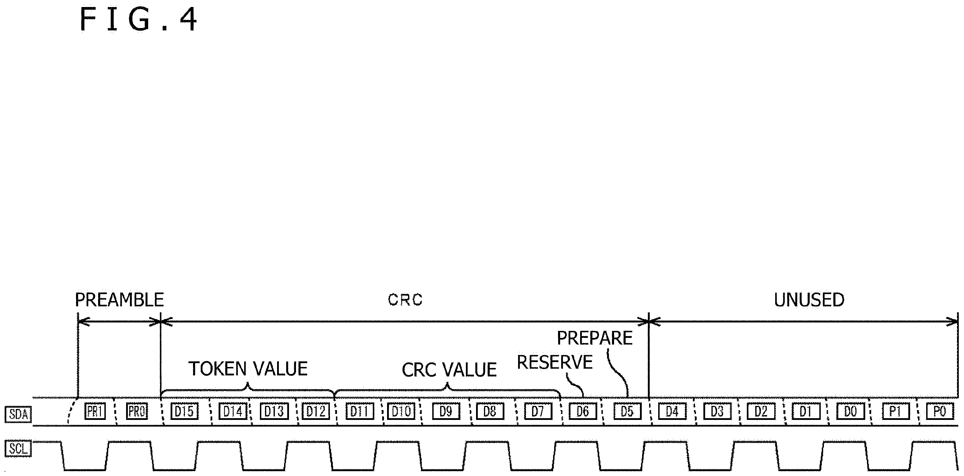

As illustrated in FIG. 4, at the time of write transfer in the DDR mode, CRC is configured by a token value of four bits D12 through D15, a CRC value of five bits D7 through D11, a reserve of one bit D6, a prepare of one bit D5, and an unused part of seven bits D0 through D4, P0, and P1.

For example, in the first example, the odd/even-number information of the valid byte count of the entire write data can be padded as notification information by use of the token value D12 through D15. Alternatively, in the second example, the odd/even-number information of the valid byte count of the entire write data can be padded as notification information by use of reserve D6. Still alternatively, in the third example, the odd/even-number information of the valid byte count of the entire write data can be padded as notification information by use of prepare D5. Yet alternatively, in the fourth example, the odd/even-number information of the valid byte count of the entire write data can be padded as notification information by use of unused part D0 through D4. It should be noted that, for the simplest configuration, the second example is suitable for employment.

As described above, by use of CRC, the master 12 can include the odd/even-number information of the valid data of the entire write data into a signal as the notification information necessary for the recognition of presence or absence of a word having invalid data. That is, if the odd/even-number information is indicative of an odd number, then the slave 13 can recognize that there is a word having invalid data, while, if the odd/even-number information is indicative of an even number, then the slave 13 can recognize that there is no word having invalid data.

Then, in the slave 13, if the recognition block 32 recognizes that there is a word having invalid data and the entire write data is odd-numbered, the word to be sent last becomes one byte, causing the send/receive block 31 to mask the invalid data of this last word.

Further, the slave 13 can obtain the byte count of the valid data of the entire write data on the basis of the odd/even-number information to be transmitted as notification information and the all sent word counts to be sent.

Still further, when the slave 13 sends read data to the master 12, the slave 13 can also likewise pad notification information in CRC; for example, the slave 13 can include the odd/even-number information of the valid data of the entire read data in a signal as notification information. Consequently, the master 12 can confirm a signal for use by the slave 13 in sending data so as to recognize presence or absence of invalid data on the basis of the notification information, thereby avoiding the execution of processing based on invalid data.

Yet further, the configuration itself of CRC as illustrated in FIG. 4 may be changed so as to pad the byte count of the valid data of the entire write data as notification information, thereby transmitting the byte count of the entire write data along with a CRC value. It is also practicable to build the data length of the valid data of the entire write data into any one of the token value D12 through D15, the reserve D6, the prepare D5, and unused part D0 through D4, P0, and P1 or by use of a combination of one or more of these items.

### <Notification method in the TSP mode or the TLS mode>

In the TSP mode or the TSL mode, a special symbol pair or a command can be used.

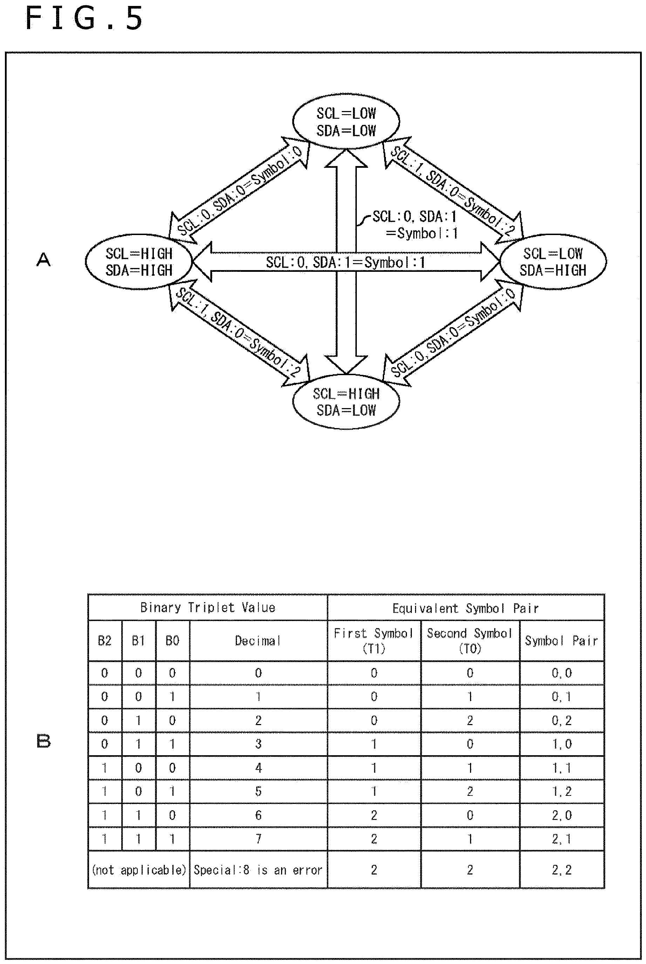

In the TSP mode or the TSL mode, communication following the coding as illustrated in B of FIG. 5 can be executed by use of three state changes of the data signal line 14-1 and the clock signal line 14-2 as illustrated in A of FIG. 5. That is, in the TSP mode or the TSL mode, three state changes of only the data signal line 14-1, only the clock signal line 14-2, or both the data signal line 14-1 and the clock signal line 14-2 are used. Consequently, the information of three-bits per two symbols can be transmitted.

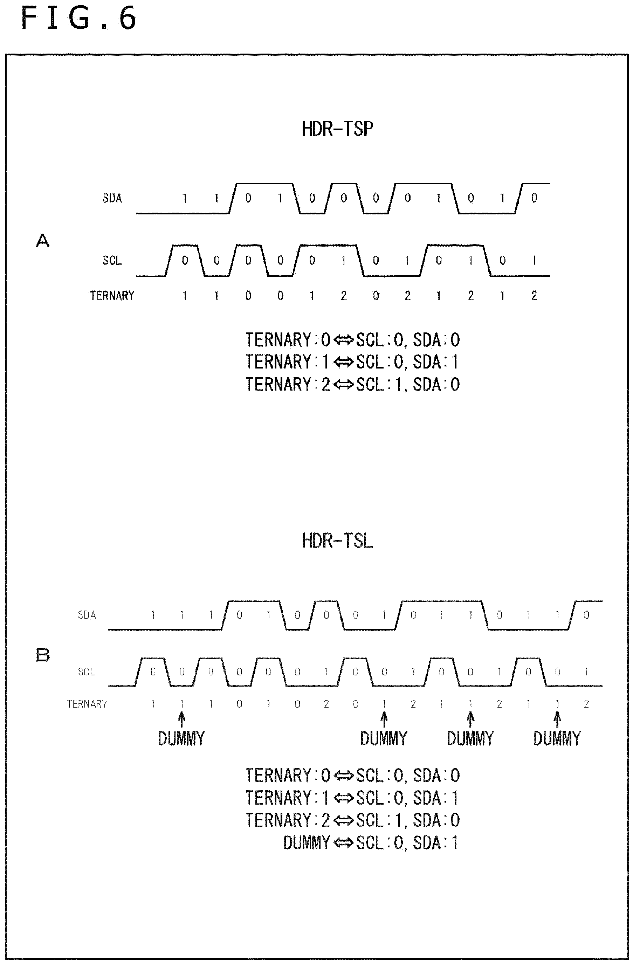

For example, in the ISP mode, as illustrated in A of FIG. 6, one word at the time of write transfer is configured by 18 bits for 12 symbols (a command or data of 16 bits and a parity of two bits).

Further, in the TSL mode, as illustrated in B of FIG. 6, one word at the time of write transfer is configured by 18 bits for 12 symbols (a command or data of 16 bits and a parity of two bits). It should be noted that, in the TSL mode, dummies are added such that the pulse of the clock signal line 14-2 becomes less than 50 nanoseconds, thereby enabling the coexistence with I2C devices.

Here, by use of a particular numerical sequence of which use in sending data is specified, a special symbol pair (2, 2) not used in normal transfer, for example, the byte count of the valid data of write data per one word can be included in a signal as notification information. For example, when the special symbol pair (2, 2) is in use, it indicates that the byte count of the valid data of write data is one byte. On the other hand, when the special symbol pair (2, 2) is not in use, it indicates that the byte count of the valid data of write data is two bytes.

As described above, depending upon the presence or absence of the special symbol pair (2, 2), the master 12 can indicate whether the byte count of the valid data per one work is one byte or two bytes, thereby including the notification information necessary for the recognition of presence or absence of a word having invalid data into a signal. That is, sending write data on a one-word basis with data of two bytes per one word included allows the slave 13 to recognize that this word has invalid data if the notification information is indicative of one byte. On the other hand, if the notification information is indicative of two bytes, the slave 13 can recognize that this word does not have invalid data.

Further, on the basis of the byte count of the valid data of write data per one word and all sent word counts, for example, the slave 13 can obtain the byte count of the valid data of the write data.

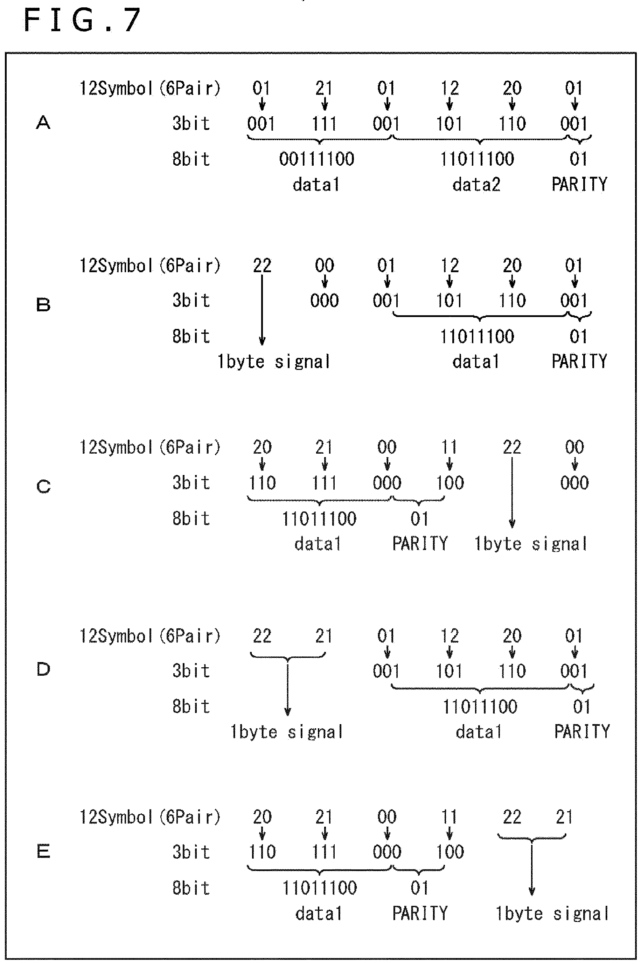

The 12 symbols (six pairs) to be sent at normal time are illustrated in A of FIG. 7 and the special symbol pair (2, 2) is not used as illustrated. Therefore, in this case, the slave 13 can recognize that the byte count of the valid data of the write data per one word is two bytes.

In B of FIG. 7 and C of FIG. 7, 12 symbols (six pairs) with the special symbol pair (2, 2) used are illustrated. As illustrated, if the special symbol pair (2, 2) including one pair of symbol "2" is sent, the slave 13 can recognize that the byte count of the valid data of the write data per one word is one byte.

In addition, 12 symbols (six pairs) with which symbol "2" is sent are indicated subsequent to the special symbol pair (2, 2) in D of FIG. 7 and E of FIG. 7. As illustrated, if three symbols "2" are also consecutively sent, the slave 13 can recognize that the byte count of the valid data of the write data per one word is one byte. It should be noted that consecutively sending four symbols "2" is already specified for use in restarting the DDR mode, so that the user as notification information is avoided.

Further, also in the TSP mode or the TSL mode, notification information can be included in a command as with the DDR mode described above. At the time of write transfer in the TSP mode or the TSL mode, the configuration of a 1-word command is similar to that illustrated in FIG. 3 described above.

For example, in the first example, the data length of the valid data of the entire write data can be padded in command codes D8 through D15 as notification information. Alternatively, in the second example, the odd/even-number information (the information indicative of an even number or an odd number) of the valid data of the entire write data can be padded in command codes D8 through D15 as notification information. Still alternatively, in the third example, the odd/even-number information of the valid data of the entire write data can be padded in reserve D0 as notification information. It should be noted that, in the second example and the third example, the data length is not limited, so that these examples are suitably employed.

Likewise, also when the slave 13 sends read data to the master 12, the presence or absence of the special symbol pair (2, 2) can be used; for example, the byte count of the valid data per one word of write data can be included in a signal as notification information. Consequently, the master 12 can confirm the signal for use by the slave 13 in sending data and recognize the presence or absence of invalid data on the basis of the notification information, thereby avoiding the execution of the processing based on invalid data.

### <Flowchart indicative of sending processing>

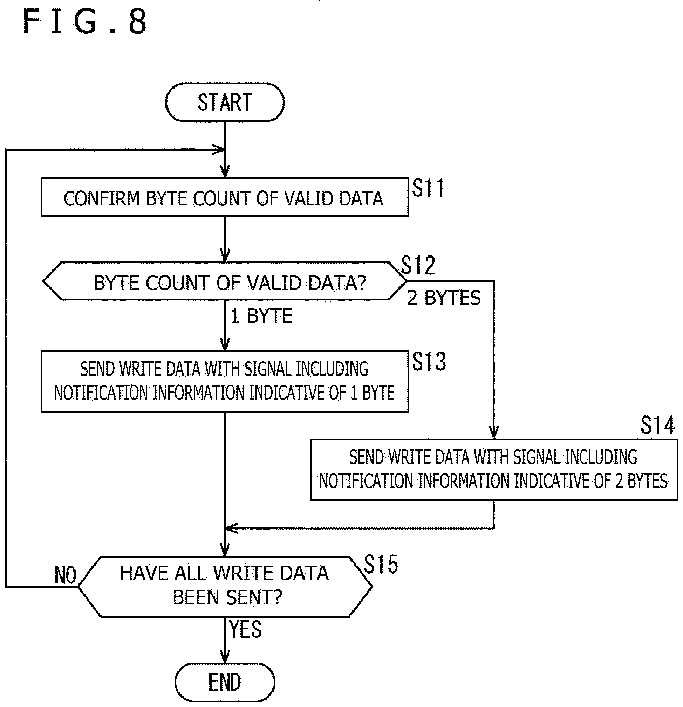

FIG. 8 depicts a flowchart indicative of one example of the processing of sending write data by the master 12 illustrated in FIG. 1. It should be noted that, as described with reference to FIG. 2, the following describes a method of sending the information about the byte count of the valid data of the subsequent write data per one word by use of the preamble.

For example, the processing starts when the data to be written to the slave 13 is supplied from upper equipment not depicted to the master 12.

In step S11, the send/receive block 21 forms the sequentially supplied write data into a word-basis format and the confirmation block 22 confirms the byte count of the valid data of this write data per one word.

In step S12, the confirmation block 22 determines, as a result of the confirmation done in step S11, whether the byte count of the valid data of the write data per one word is one byte or two bytes.

If the confirmation block 22 determines that the byte count of the valid data of the write data per one word is one byte in step S12, then the processing goes to step S13.

In step S13, the confirmation block 22 instructs the send/receive block 21 to include the notification information indicative that the byte count of the valid data of the write data per one word is one word into a signal. Accordingly, the send/receive block 21 sends, to the slave 13, the write data of one word with preamble PR1 of one word to be sent set to "1" and preamble PR0 to "0" as illustrated in FIG. 2 described above.

On the other hand, if the confirmation block 22 determines that the byte count of the valid data of the write data per one word is two bytes in step S12, then the processing goes to step S14.

In step S14, the confirmation block 22 instructs the send/receive block 21 to include the notification information indicative that the byte count of the valid data of the write data per one word is two bytes into a signal. Accordingly, the send/receive block 21 sends, to the slave 13, the write data of one word with preamble PR1 of one word to be sent set to "1" and preamble PR0 to "1" as illustrated in FIG. 2 described above.

After the completion of the processing of step S13 or S14, the processing goes to step S15 in which the send/receive block 21 determines whether the write data to be sent to the slave 13 have all been sent or not.

If the send/receive block 21 determines in step S15 that the write data to be sent to the slave 13 have not all been sent, then the processing returns to step S11 in which the similar processing is repeated on the write data to be supplied next.

On the other hand, if the send/receive block 21 determines in step S15 that the write data to be sent to the slave 13 have all been sent, then the processing is terminated.

As described above, the master 12 can include the notification information indicative of the byte count of the valid data of the write data per one word into a signal on a word basis with which the send/receive block 21 sends write data. For example, if the byte count of the valid data of the entire write data is even-numbered, then the notification information of all words is indicative of two bytes, thereby notifying the slave 13 that the word to be sent does not include invalid data. On the other hand, if the byte count of the valid data of the entire write data is odd-numbered, for example, then, if words are configured, two bytes by two bytes, with sequentially supplied write data, the last word becomes one byte. Therefore, the notification information of the last sent word is indicative of one byte, thereby notifying the slave 13 of the inclusion of invalid data in words sent.

### <Flowchart indicative of receiving processing>

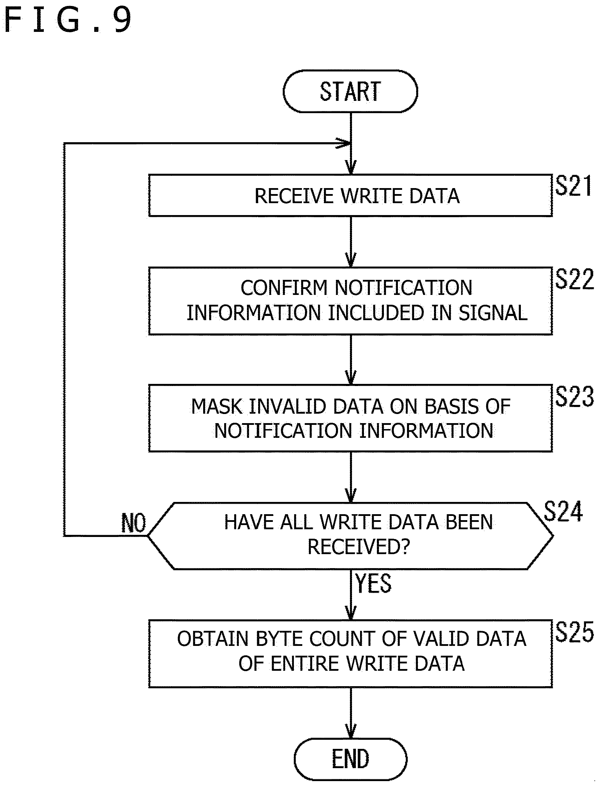

FIG. 9 depicts a flowchart indicative of one example of the processing of receiving write data by the slave 13 illustrated in FIG. 1.

For example, when the write data on a word basis comes from the master 12, the processing starts and, upon receiving one word of the write data in step S21, the send/receive block 31 supplies the signal used for sending this write data to the recognition block 32.

In step S22, the recognition block 32 confirms the notification information included in the signal supplied from the 21 in step S21 so as to recognize whether this word has invalid data or not. For example, if a signal including the notification information indicative that the byte count of the valid is one byte is transferred in step S13 of FIG. 8, then the recognition block 32 recognizes that the word has invalid data. On the other hand, if a signal including the notification information indicative the byte count of the valid data is two bytes in step S14 of FIG. 8, then the recognition block 32 recognizes that the word does not have invalid data.

In step S23, on the basis of a result of the confirmation of the notification information by the recognition block 32 in step S22, the send/receive block 31 masks the invalid data included in the word having invalid data. That is, the send/receive block 31 extracts only the valid data from the word having invalid data and supplies the extracted valid data to the processing execution block 34.

In step S24, the send/receive block 31 determines whether the write data have all been received from the master 12.

If the send/receive block 31 determines that the write data sent from the master 12 have not all been received in step S24, then the processing returns to step S21 to repeat the similar processing on the write data for one word to be sent next.

On the other hand, if the send/receive block 31 determines that the write data sent from the master 12 have all been received in step S24, then the processing goes to step S25.

In step S25, the recognition block 32 obtains the byte count of the valid data of the entire write data on the basis of the byte count of the valid data of the write data per one word and the all sent word counts, upon which the processing is terminated.

As described above, in the bus IF 11, the presence or absence of invalid data can be recognized in the slave 13, so that the avoidance of the erroneous recognition between valid data and invalid data allows more correct communication. For example, in the bus IF 11, invalid data can be prevented from being written to an address not intended by a register, thereby allowing the correct writing of only the valid data to a register.

Further, as described above, in the bus IF 11, if the byte count of the valid data of the write data per one word is sent, the data length of the valid data of the entire write data need not be separately sent, for example, thereby enhancing the efficiency of transmission. That is, the unnecessity of using a packet header and the like for transmitting data a data length allows the reduction of the data to be transmitted by that amount.

Also, as described above, in the bus IF 11, the send/receive block 21, confirmation block 22, and the recognition block 23 in the master 12 and the send/receive block 31, the recognition block 32, and confirmation block 33 in the slave 13 are mounted on the physical layer. This setup makes it unnecessary to change the standard of the existing link layer necessary for providing a configuration in which to execute the rounding of the valid data on the upper link layer, for example. Changing the standard of the existing link layer as described above may cause a large influence due to the difference in the link layer standard between communication apparatuses; however, the occurrence of such an influence can be avoided in the bus IF 11.

It should be noted that the present technology is not restricted by the bus IF 11 compliant with the I3C standard and therefore applicable to the bus IF 11 compliant with other standards. Further, in the bus IF 11 illustrated in FIG. 1, an example in which the slaves 13-1 through 13-3 are interconnected is illustrated; however, it is also practicable to provide onr or two or more than three units of the slave 13, for example.

In addition, the slave 13 may be other than the memory or the register and the data to be sent by the master 12 to the slave 13 is not restricted to write data. For example, if the slave 13 is a device for controlling the light emission of a light-emitting element, then the data indicative of a timing of light-emitting a light-emitting element is sent from the master 12 and, on the basis of this data, the slave 13 can correctly make the light-emitting element emit light.

It should be noted that the processing operations described with reference to the flowchart described above need not always be sequentially executed in time series described in these flowcharts; namely, these processing operations include processing operations that are executed in parallel or discretely (parallel processing or processing based on objects, for example). Further, a program may be processed by one unit of CPU or by two or more units of CPU in a distributed manner.

In addition, the sequence of processing operations described above may be executed by hardware as well as software. When the sequence of the processing operations is executed by software, the programs configuring this software are installed in a computer in which dedicated hardware containing these programs is built or a general-purpose personal computer, for example, in which various functions can be executed by installing various programs from a program recording medium to which the programs are recorded.

### <Configurational example of hardware>

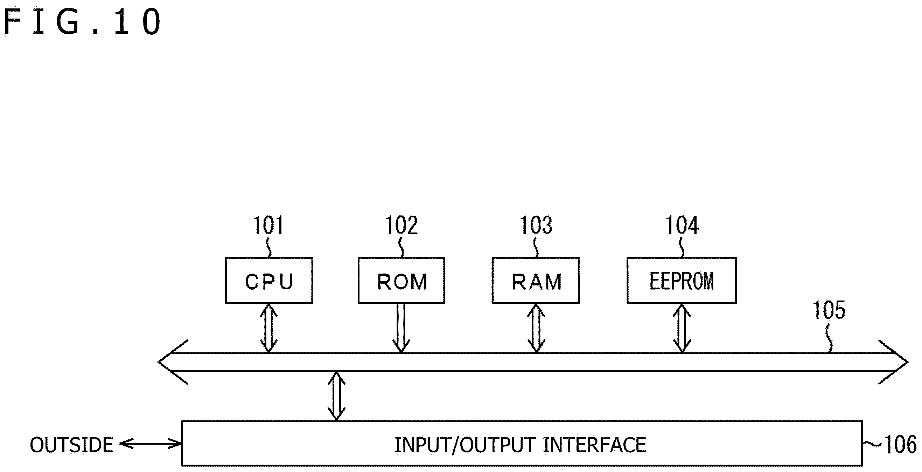

FIG. 10 depicts a block diagram illustrating an example of the hardware of a computer in which the sequence of processing operations described above is executed by programs.

In the computer, a CPU (Central Processing Unit) 101, a ROM (Read Only Memory) 102, a RAM (Random Access Memory) 103, and an EEPROM (Electrically Erasable and Programmable Read Only Memory) are interconnected via a bus 105. The bus 105 is further connected to an input/output interface 106 that is connected to the outside (the data signal line 14-1 and the clock signal line 14-2 illustrated in FIG. 1, for example).

In the computer configured as described above, the CPU 101 loads programs from the ROM 102 and EEPROM 104, for example, into the RAM 103 via the bus 105 and executes the loaded programs, thereby executing the sequence of processing operations described above. Also, in addition for the programs to be executed by the computer (the CPU 101) to be written to the ROM 102 in advance, these programs can be installed into the EEPROM 104 from the outside via the input/output interface 106 for execution or updating.

It should be noted that the present technology can also take the following configuration.
(1) A communication apparatus including:
   a sending section configured to send data including a predetermined byte count per one word to another communication apparatus on a word basis in which the data is included; and
   a confirmation section configured to confirm the data to be sent to the another communication apparatus so as to include notification information necessary for recognizing presence or absence of a word having invalid data into a signal to be transferred to the another communication apparatus.
(2) The communication apparatus according to (1) above, in which
   the sending section and the confirmation section are mounted on a physical layer of a protocol that executes communication with the another communication apparatus.
(3) The communication apparatus according to (1) or (2) above, in which
   a preamble configuring one word for use in sending the data is indicative of valid data count of data per one word to be sent subsequent to the preamble as the notification information.
(4) The communication apparatus according to (1) or (2) above, in which
   data length or odd/even-number information of valid data of the entire data is padded, as the notification information, in a command code configuring a command to be sent to the another communication apparatus along with the data.
(5) The communication apparatus according to (1) or (2) above, in which
   odd/even-number information of valid data of the entire data is padded, as the notification information, into a reserve configuring a command to be sent to the another communication apparatus along with the data.
(6) The communication apparatus according to (1) or (2) above, in which
   odd/even-number information of valid data of the entire data is padded, as the notification information, into a token value, a reserve, a prepare, or an unused part configuring a CRC (Cyclic Redundancy Check) to be sent to the another communication apparatus along with the data.
(7) The communication apparatus according to (1) or (2) above, in which
   a data length of valid data of the entire data is padded, as the notification information, by use of at least one of a token value, a reserve, a prepare, and an unused part configuring a CRC to be sent to the another communication apparatus along with the data.
(8) The communication apparatus according to (1) or (2) above, in which
   presence or absence of sending of a particular numerical series not specified for use in sending the data is indicative of a valid data count of data per one word as the notification information.
(9) A communication method including the steps of:
   sending data including a predetermined byte count per one word to another communication apparatus on a word basis in which the data is included; and
   confirming the data to be sent to the another communication apparatus so as to include notification information necessary for recognizing presence or absence of a word having invalid data into a signal to be transferred to the another communication apparatus.
(10) A program for having a computer execute processing including the steps of:
   sending data including a predetermined byte count per one word to another communication apparatus on a word basis in which the data is included; and
   confirming the data to be sent to the another communication apparatus so as to include notification information necessary for recognizing presence or absence of a word having invalid data into a signal to be transferred to the another communication apparatus.
(11) A communication apparatus including:
   a receiving section configured to receive data sent on a word basis including data of a predetermined byte count per one word from another communication apparatus; and
   a recognition section configured to, if, in accordance with notification information necessary for recognizing presence or absence of a word having invalid data, the notification information being included in a signal transferred from the another communication apparatus, the receiving section recognizes that the received word has invalid data, avoid an execution of processing based on the invalid data.
(12) The communication apparatus according to (11) above, in which
   the receiving section and the recognition section are mounted on a physical layer of a protocol that executes communication with the another communication apparatus.
(13) A communication method including the steps of:
   receiving data sent on a word basis including data of a predetermined byte count per one word from another communication apparatus; and
   avoiding, if, in accordance with notification information necessary for recognizing presence or absence of a word having invalid data, the notification information being included in a signal transferred from the another communication apparatus recognizes that the received word has invalid data, the execution of processing based on the invalid data.
(14) A program for having a computer execute processing including the steps of:
   receiving data sent on a word basis including data of a predetermined byte count per one word from another communication apparatus; and
   avoiding, if, in accordance with notification information necessary for recognizing presence or absence of a word having invalid data, the notification information being included in a signal transferred from the another communication apparatus recognizes that the received word has invalid data, the execution of processing based on the invalid data.
(15) A communication system including:
   a communication apparatus on a sending side having
   a sending section configured to send data including a predetermined byte count per one word to a communication apparatus on a receiving side on a word basis in which the data is included, and
   a confirmation section configured to confirm the data to be sent to the communication apparatus on the receiving side so as to include notification information necessary for recognizing presence or absence of a word having invalid data into a signal to be transferred to the communication apparatus on the receiving side; and a communication apparatus on the receiving side having
   a receiving section configured to receive the data sent from the communication apparatus on the sending side, and
   a recognition section configured to, if, in accordance with the notification information being included in a signal transferred from the communication apparatus on the sending side, the receiving section recognizes that the received word has invalid data, avoid an execution of processing based on the invalid data.

While preferred embodiments of the present disclosure have been described using specific terms, such description is for illustrative purpose only, and it is to be understood by those skilled in the art that changes and variations may be made without departing from the spirit or scope of the present disclosure.

### [Reference Signs List]

11 ... Bus IF, 12 ... Master, 13 ... Slave, 14-1 Data signal line, 14-2 ... Clock signal line, 21 ... Send/receive block, 22 ... Confirmation block, 23 ... Recognition block, 31 ... Send/receive block, 32 ... Recognition block, 33 ... Confirmation block, 34 ... Processing execution block

## Claims

1. A communication apparatus comprising:
a sending section configured to send data including a predetermined byte count per one word to another communication apparatus on a word basis in which the data is included; and
a confirmation section configured to confirm the data to be sent to the another communication apparatus so as to include notification information necessary for recognizing presence or absence of a word having invalid data into a signal to be transferred to the another communication apparatus.

2. The communication apparatus according to claim 1, wherein
the sending section and the confirmation section are mounted on a physical layer of a protocol that executes communication with the another communication apparatus.

3. The communication apparatus according to claim 1, wherein
a preamble configuring one word for use in sending the data is indicative of valid data count of data per one word to be sent subsequent to the preamble as the notification information.

4. The communication apparatus according to claim 1, wherein
data length or odd/even-number information of valid data of the entire data is padded, as the notification information, in a command code configuring a command to be sent to the another communication apparatus along with the data.

5. The communication apparatus according to claim 1, wherein
odd/even-number information of valid data of the entire data is padded, as the notification information, into a reserve configuring a command to be sent to the another communication apparatus along with the data.

6. The communication apparatus according to claim 1, wherein
odd/even-number information of valid data of the entire data is padded, as the notification information, into a token value, a reserve, a prepare, or an unused part configuring a CRC (Cyclic Redundancy Check) to be sent to the another communication apparatus along with the data.

7. The communication apparatus according to claim 1, wherein
a data length of valid data of the entire data is padded, as the notification information, by use of at least one of a token value, a reserve, a prepare, and an unused part configuring a CRC to be sent to the another communication apparatus along with the data.

8. The communication apparatus according to claim 1, wherein
presence or absence of sending of a particular numerical series not specified for use in sending the data is indicative of a valid data count of data per one word as the notification information.

9. A communication method comprising the steps of:
sending data including a predetermined byte count per one word to another communication apparatus on a word basis in which the data is included; and
confirming the data to be sent to the another communication apparatus so as to include notification information necessary for recognizing presence or absence of a word having invalid data into a signal to be transferred to the another communication apparatus.

10. A program for having a computer execute processing including the steps of:
sending data including a predetermined byte count per one word to another communication apparatus on a word basis in which the data is included; and
confirming the data to be sent to the another communication apparatus so as to include notification information necessary for recognizing presence or absence of a word having invalid data into a signal to be transferred to the another communication apparatus.

11. A communication apparatus comprising:
a receiving section configured to receive data sent on a word basis including data of a predetermined byte count per one word from another communication apparatus; and
a recognition section configured to, if, in accordance with notification information necessary for recognizing presence or absence of a word having invalid data, the notification information being included in a signal transferred from the another communication apparatus, the receiving section recognizes that the received word has invalid data, avoid an execution of processing based on the invalid data.

12. The communication apparatus according to claim 11, wherein
the receiving section and the recognition section are mounted on a physical layer of a protocol that executes communication with the another communication apparatus.

13. A communication method comprising the steps of:
receiving data sent on a word basis including data of a predetermined byte count per one word from another communication apparatus; and
avoiding, if, in accordance with notification information necessary for recognizing presence or absence of a word having invalid data, the notification information being included in a signal transferred from the another communication apparatus recognizes that the received word has invalid data, the execution of processing based on the invalid data.

14. A program for having a computer execute processing including the steps of:
receiving data sent on a word basis including data of a predetermined byte count per one word from another communication apparatus; and
avoiding, if, in accordance with notification information necessary for recognizing presence or absence of a word having invalid data, the notification information being included in a signal transferred from the another communication apparatus recognizes that the received word has invalid data, the execution of processing based on the invalid data.

15. A communication system comprising:
a communication apparatus on a sending side having
a sending section configured to send data including a predetermined byte count per one word to a communication apparatus on a receiving side on a word basis in which the data is included, and
a confirmation section configured to confirm the data to be sent to the communication apparatus on the receiving side so as to include notification information necessary for recognizing presence or absence of a word having invalid data into a signal to be transferred to the communication apparatus on the receiving side; and
a communication apparatus on the receiving side having
a receiving section configured to receive the data sent from the communication apparatus on the sending side, and
a recognition section configured to, if, in accordance with the notification information being included in a signal transferred from the communication apparatus on the sending side, the receiving section recognizes that the received word has invalid data, avoid an execution of processing based on the invalid data.

## Amended claims

### Amended claims under Art. 19.1 PCT

1. A communication apparatus comprising:
a sending section configured to send, via a data signal line for transmitting serial data and a clock signal line for transmitting a serial clock, on a word basis in which data of predetermined byte count per one word is included, the data to another communication apparatus; and
a confirmation section configured to confirm the data sent to the another communication apparatus so as to include notification information necessary for recognizing presence or absence of a word having invalid data into a signal to be transferred to the another communication apparatus, wherein
the sending section sends a data length of valid data of the entire data as the notification information at the time of write transfer in a DDR (Double Data Rate) mode of a plurality of modes specified by an HDR (High Data Rate) mode for transferring data of two bytes per one word.

2. The communication apparatus according to claim 1, wherein
the sending section and the confirmation section are mounted on a physical layer of a protocol that executes communication with the another communication apparatus.

3. The communication apparatus according to claim 1, wherein
a preamble configuring one word for use in sending the data is indicative of valid data count of data per one word to be sent subsequent to the preamble as the notification information.

4. The communication apparatus according to claim 1, wherein
data length or odd/even-number information of valid data of the entire data is padded, as the notification information, in a command code configuring a command to be sent to the another communication apparatus along with the data.

5. The communication apparatus according to claim 1, wherein
odd/even-number information of valid data of the entire data is padded, as the notification information, into a reserve configuring a command to be sent to the another communication apparatus along with the data.

6. The communication apparatus according to claim 1, wherein
odd/even-number information of valid data of the entire data is padded, as the notification information, into a token value, a reserve, a prepare, or an unused part configuring a CRC (Cyclic Redundancy Check) to be sent to the another communication apparatus along with the data.

7. The communication apparatus according to claim 1, wherein
a data length of valid data of the entire data is padded, as the notification information, by use of at least one of a token value, a reserve, a prepare, and an unused part configuring a CRC to be sent to the another communication apparatus along with the data.

8. The communication apparatus according to claim 1, wherein
presence or absence of sending of a particular numerical series not specified for use in sending the data is indicative of a valid data count of data per one word as the notification information.

9. A communication method comprising the steps of:
sending, via a data signal line for transmitting serial data and a clock signal line for transmitting a serial clock, on a word basis in which data of predetermined byte count per one word id included, the data to another communication apparatus; and
confirming the data sent to the another communication apparatus so as to include notification information necessary for recognizing presence or absence of a word having invalid data into a signal to be transferred to the another communication apparatus, wherein
a data length of valid data of the entire data is sent as the notification information at the time of write transfer in a DDR (Double Data Rate) mode of a plurality of modes specified by an HDR (High Data Rate) mode for transferring data of two bytes per one word.

10. A program for having a computer execute processing of:
sending, via a data signal line for transmitting serial data and a clock signal line for transmitting a serial clock, on a word basis in which data of predetermined byte count per one word is included, the data to another communication apparatus; and
confirming the data sent to the another communication apparatus so as to include notification information necessary for recognizing presence or absence of a word having invalid data into a signal to be transferred to the another communication apparatus, wherein
a data length of valid data of the entire data is sent as the notification information at the time of write transfer in a DDR (Double Data Rate) mode of a plurality of modes specified by an HDR (High Data Rate) mode for transferring data of two bytes per one word.

11. A communication apparatus comprising:
a receiving section configured to receive data from another communication apparatus via a data signal line for transmitting serial data and a clock signal line for transmitting a serial clock on a word basis in which data of a predetermined byte count per one word is included; and
a recognition section configured to, if, in accordance with notification information necessary for recognizing presence or absence of a word having invalid data, the notification information being included in a signal transferred from the another communication apparatus, the receiving section recognizes that the received word has invalid data, avoid an execution of processing based on the invalid data, wherein
the receiving section receives a data length of valid data of the entire data as the notification information at the time of write transfer in a DDR (Double Data Rate) mode in a plurality of modes specified by an HDR (High Data Rate) mode for transferring data of two bytes per one word.

12. The communication apparatus according to claim 11, wherein
the receiving section and the recognition section are mounted on a physical layer of a protocol that executes communication with the another communication apparatus.

13. A communication method comprising the steps of:
receiving data from another communication apparatus via a data signal line for transmitting serial data and a clock signal line for transmitting a serial clock on a word basis in which data of a predetermined byte count per one word is included; and
if, in accordance with notification information necessary for recognizing presence or absence of a word having invalid data, the notification information being included in a signal transferred from the another communication apparatus, the receiving section recognizes that the received word has invalid data, avoiding an execution of processing based on the invalid data, wherein
a data length of valid data of the entire data is received as the notification information at the time of write transfer in a DDR (Double Data Rate) mode in a plurality of modes specified by an HDR (High Data Rate) mode for transferring data of two bytes per one word.

14. A program for having a computer execute processing of:
receiving data from another communication apparatus via a data signal line for transmitting serial data and a clock signal line for transmitting a serial clock on a word basis in which data of a predetermined byte count per one word is included; and
if, in accordance with notification information necessary for recognizing presence or absence of a word having invalid data, the notification information being included in a signal transferred from the another communication apparatus, the receiving section recognizes that the received word has invalid data, avoiding an execution of processing based on the invalid data, wherein
a data length of valid data of the entire data is received as the notification information at the time of write transfer in a DDR (Double Data Rate) mode in a plurality of modes specified by an HDR (High Data Rate) mode for transferring data of two bytes per one word.

15. A communication system comprising:
a communication apparatus on a sending side having
a sending section configured to send, via a data signal line for transmitting serial data and a clock signal line for transmitting a serial clock, on a word basis in which data of predetermined byte count per one word is included, the data to a communication apparatus on a receiving side, and
a confirmation section configured to confirm the data sent to the communication apparatus on the receiving side so as to include notification information necessary for recognizing presence or absence of a word having invalid data into a signal to be transferred to the communication apparatus on the receiving side; and
a communication apparatus on the receiving side having
a receiving section configured to receive the data from the communication apparatus on the sending side, and
a recognition section configured to, if, in accordance with the notification information being included in a signal transferred from the communication apparatus on the sending side, the receiving section recognizes that the received word has invalid data, avoid an execution of processing based on the invalid data, wherein
a data length of valid data of the entire data is sent and received as the notification information at the time of write transfer in a DDR (Double Data Rate) mode in a plurality of modes specified by an HDR (High Data Rate) mode for transferring data of two bytes per one word.
